# EUROPÄISCHE PATENTANMELDUNG

(11) **EP 1 720 053 A1**
(43) Veröffentlichungstag der Anmeldung: **08.11.2006**
(21) Anmeldenummer: 06008983.6
(22) Anmeldetag: 29.04.2006
(51) Int. Cl.: G02B 21/00

(54) **Laser-Scanning-Mikroskop**

(30) Priorität: 03.05.2005 DE 102005020540
(71) Anmelder: Carl Zeiss Microlmaging GmbH, 07745 Jena (DE)
(72) Erfinder: Wolleschensky, Ralf, 99510 Apolda (DE); Bathe, Wolfgang, 07743 Jena (DE); Hecht, Frank, 99425 Weimar (DE); Engelmann, Ralf, 07745 Jena (DE); Steinert, Jörg, 07743 Jena (DE)
(74) Vertreter: Hampe, Holger

(57) **Zusammenfassung**

Laser-Scanning-Mikroskop mit einer Beleuchtungslichtverteilung, die scannend über eine Probe geführt wird und bei dem ein Bild der Probe aus dem beim Scannen entstehenden und detektierten Probenlicht aufgenommen wird,
wobei die Probe mit einer Bildrate von x Bildern pro Sekunde abgetastet wird,
wobei in einem Modus zur Einstellung der Geräteparameter die Bildrate bei gleichbleibender Abtastgeschwindigkeit, vorzugsweise zur Probenschonung, auf einen Bruchteil X/Y von X, Y >1 herabgesetzt wird.

## Beschreibung

Im Stand der Technik (7323DE) ist es bekannt, einen sogenannten "kontinuierlichen Scanmodus zur Einstellung aller wichtigen Parameter für die Bildaufnahme am Mikroskop zu verwenden. Im "Continous-Scan" werden kontinuierlich Bilder aufgenommen und dargestellt (aber nicht gespeichert), um dem Nutzer die Möglichkeit zu geben, seine Probe "online" zu beobachten. Z.B. um zu fokussieren, eine interessante Probenstelle zu suchen, Belichtung und Empfindlichkeit einzustellen.
Dabei wird die Probe insbesondere bei hohen Bildraten (geringen Integrationszeiten) stark belastet.
Das (feste) Verhältnis von Scanzeit und Pausezeit (Umkehrphasen oder Rückscanzeit des Scanners) ist nicht auf die Anforderungen der Probe abgestimmt.
Dieses Problem wird erfindungsgemäß durch die unabhängigen Patentansprüche gelöst.
Bevorzugte Weiterbildungen sind Gegenstand der abhängigen Ansprüche.
Gerade bei einem sehr schnellen Linienscanner mit Bildraten über 100 Bildern prp Sekunde, wie er im Ausführungsbeispiel beschrieben ist, reichen beim Einstellen der Mikroskopparameter schon Bildraten von 25 Bildern/Sekunde, oft auch schon deutlich weniger (5 Bilder/Sekunde).
Wesentlich ist, dass hier nicht wie im Stand der Technik die Scannergeschwindigkeit an sich herabgesetzt wird (nachteilig: Veränderung der Integrationszeit und Beeinflussung der Parameter für die Bildaufnahme), sondern die Pausen zwischen den Bildaufnahmen erhöht werden.
Vorteilhaft ergeben sich keine Nachteile bezüglich der Einstellung der Geräteparameter, aber die Probe wird weniger belastet.
Dies kann erfolgen, indem eine getrennte Einstellung für Integrationszeit und Bildrate (Pausenzeit), beispielsweise über getrennte Schieberegler, vorgenommen wird.
Dies kann erfolgen, indem eine automatische Vorgabe für diese Werte erfolgt,
z.B. eine feste Vorgabe für die Bild-Rate von 25 fpsec für das Auge real time oder mehrere vom Nutzer wählbare Presets (25, 15, 5 fpsec)), indem bei weiterlaufendem Scanner eine Abschaltung oder Reduzierung von Beleuchtungswellenlängen erfolgt, beispielsweise mit dem vorhandenen AOTF siehe DE7223), wobei der Scanner unvermindert weiterläuft, oder aber durch Stoppen des Scanners zwischen den Scans.
Bei sehr schnellen Scans wird vorteilhaft eine ausreichende Einschwingzeit vor der eigentlichen Bildaufnahme vorangestellt.

Eine Weiterbildung der Erfindung sieht folgendermaßen aus:
Immer wenn eine Interaktion des Nutzers stattfindet, wird ein neues Bild aufgenommen, also beispielsweise bei
- Bewegen des z-Triebes
- Bewegen des Probentisches
- Änderungen der Konfiguration (Filter, Pinhole, Integrationszeit, Gain etc.)
Auch Einstellungen durch den Nutzer ohne direkte Interaktion am Gerät (über eine softwaregesteuerte Schaltfläche, oder z.B. die üblichen Bedienknöpfe können den erfindungsgemäßen Modus auslösen, ebenso auch ein extra zu diesem Zweck erstellter "Refresh" Button.
Dieses Verfahren ist vorteilhaft mit der oben beschriebenen reduzierten Bildrate kombinierbar um die Probe zu schonen und insbesondere bei Fluoreszenzuntersuchungen das Ausbleichen zu verhindern.
Das System würde also nur dann Bilder aufnehmen, wenn der Nutzer auch tatsächlich eine Änderung vornimmt.
Erfindungsgemäß ist es dann möglich eine (einstellbare) Zeitdauer bis zum Stoppen der Beleuchtung oder der Bildaufnahme nach Ende der Interaktion zu warten, um eventuelle Reaktionszeiten z.B. der Probe mit zu erfassen. In den Zwischenzeiten, wenn das Bild sowieso immer gleich aussieht, wird nicht gescannt. So wird die Beleuchtung und damit die Probenschädigung minimiert. Auf dem Bildschirm wäre das zuletzt gescannte Bild noch zu sehen (was, da keine Änderung stattfand, noch dem aktuellen Stand entspricht).
Ein typischer Ablauf sieht folgendermaßen aus:
- der Nutzer aktiviert einen sogenannten "Image on demand"-Mode (bisher aktiviert er einen continous scan) und optimiert die Einstellungen.
- der Nutzer bricht den Modus nach erfolgter Einstellung ab. Zu diesem Zeitpunkt ist das letzte aufgenommene Bild noch auf dem Monitor zu sehen. Alle vorher aufgenommenen Bilder hat das System verworfen.
   Der Nutzer kann dann das letzte Bild speichern, wenn er möchte.

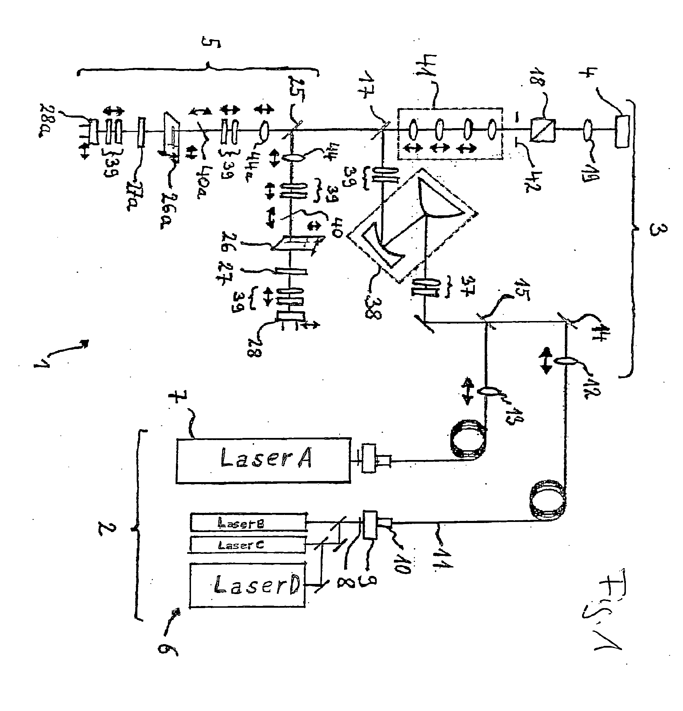

Figur 1 zeigt schematisch ein Laserscanningmikroskop 1, das im wesentlichen aus fünf Komponenten aufgebaut ist: einem Strahlungsquellenmodul 2, das Anregungsstrahlung für die Laserscanningmikroskopie erzeugt, einem Scanmodul 3, das die Anregungsstrahlung konditioniert und zum Scannen über eine Probe geeignet ablenkt, einem zur Vereinfachung nur schematisch gezeigten Mikroskopmodul 4, das die vom Scanmodul bereitgestellte scannende Strahlung in einem mikroskopischen Strahlengang auf eine Probe richtet, sowie einem Detektormodul 5, das optische Strahlung von der Probe erhält und detektiert. Das Detektormodul 5 kann dabei, wie es in Figur 1 dargestellt ist, spektral mehrkanalig ausgeführt sein.
Zur allgemeinen Beschreibung eines punktweise abtastenden Laser Scanning Mikroskopes wird auf DE 19702753A1 verwiesen, die somit Bestandteil der hier vorliegenden Beschreibung ist.
Das Strahlungsquellenmodul 2 erzeugt Beleuchtungsstrahlung, die für die Laserscanningmikroskopie geeignet ist, also insbesondere Strahlung, die Fluoreszenz auslösen kann. Je nach Applikation weist das Strahlungsquellenmodul dazu mehrere Strahlungsquellen auf. In einer dargestellten Ausführungsform werden zwei Laser 6 und 7 im Strahlungsquellenmodul 2 vorgesehen, denen jeweils ein Lichtventil 8 sowie ein Abschwächer 9 nachgeschaltet sind und die ihre Strahlung über ein Koppelstelle 10 in eine Lichtleitfaser 11 einkoppeln. Das Lichtventil 8 wirkt als Strahlablenker, mit dem eine Strahlabschaltung bewirkt werden kann, ohne den Betrieb der Laser in der Lasereinheit 6 bzw. 7 selbst abschalten zu müssen. Das Lichtventil 8 ist beispielsweise als AOTF ausgebildet, das zur Strahlabschaltung den Laserstrahl vor der Einkopplung in die Lichtleitfaser 11 in Richtung einer nicht dargestellten Lichtfalle ablenkt.

In der beispielhaften Darstellung der Figur 1 weist die Lasereinheit 6 drei Laser B, C, D auf, wohingegen die Lasereinheit 7 nur einen Laser A beinhaltet. Die Darstellung ist also beispielhaft für eine Kombination aus Einzel- und Multiwellenlängenlaser, die einzeln oder auch gemeinsam an eine oder mehrere Fasern angekoppelt sind. Auch kann die Ankopplung über mehrere Fasern gleichzeitig erfolgen, deren Strahlung später nach Durchlaufen einer Anpaßoptik durch Farbvereiniger gemischt wird. Es ist somit möglich, verschiedenste Wellenlängen oder -bereiche für die Anregungsstrahlung zu verwenden.

Die in die Lichtleitfaser 11 eingekoppelte Strahlung wird mittels verschieblichen Kollimationsoptiken 12 und 13 über Strahlvereinigungsspiegel 14, 15 zusammengeführt und in einer Strahlformungseinheit hinsichtlich des Strahlprofils verändert.

Die Kollimatoren 12, 13 sorgen dafür, daß die vom Strahlungsquellenmodul 2 an das Scanmodul 3 zugeführte Strahlung in einen Unendlichstrahlengang kollimiert wird. Dies erfolgt jeweils vorteilhaft mit einer einzelnen Linse, die durch Verschiebung entlang der optischen Achse unter Steuerung (einer nicht dargestellten) zentralen Ansteuereinheit eine Fokussierungsfunktion hat, indem der Abstand zwischen Kollimator 12, 13 und dem jeweiligen Ende der Lichtleitfaser veränderbar ist.

Die Strahlformungseinheit, welche später noch eingehend erläutert wird, erzeugt aus dem rotationssymmetrischen, gaußförmig profilierten Laserstrahl, wie er nach den Strahlvereinigungsspiegeln 14, 15 vorliegt, einen zeilenförmigen Strahl, der nicht mehr rotationssymmetrisch ist, sondern im Querschnitt zur Erzeugung eines rechteckig beleuchteten Feldes geeignet ist.

Dieser auch als zeilenförmig bezeichnete Beleuchtungsstrahl dient als Anregungsstrahlung und wird über einen Hauptfarbteiler 17 und eine noch zu beschreibende Zoomoptik zu einem Scanner 18 geleitet. Auf den Hauptfarbteiler wird später ebenfalls noch eingegangen, hier sei lediglich erwähnt, daß er die Funktion hat, vom Mikroskopmodul 4 zurückkehrende Probenstrahlung von der Anregungsstrahlung zu trennen.

Der Scanner 18 lenkt den zeilenförmigen Strahl ein- oder zweiachsig ab, wonach er durch ein Scanobjektiv 19 sowie eine Tubuslinse und ein Objektiv des Mikroskopmoduls 4 in einen Fokus 22 gebündelt wird, der in einem Präparat bzw. in einer Probe liegt. Die optische Abbildung erfolgt dabei so, daß die Probe in einer Brennlinie mit Anregungsstrahlung beleuchtet wird.

Derart im linienförmigen Fokus angeregte Fluoreszenz-Strahlung gelangt über Objektiv und Tubuslinse des Mikroskopmoduls 4 und das Scanobjektiv 19 zurück zum Scanner 18, so daß in Rückrichtung nach dem Scanner 18 wieder ein ruhender Strahl vorliegt. Man spricht deshalb auch davon, daß der Scanner 18 die Fluoreszenz-Strahlung descannt.

Der Hauptfarbteiler 17 läßt die in anderen Wellenlängenbereichen als die Anregungsstrahlung liegende Fluoreszenz-Strahlung passieren, so daß sie über einen Umlenkspiegel 24 im Detektormodul 5 umgelenkt und dann analysiert werden kann. Das Detektormodul 5 weist in der Ausführungsform der Figur 1 mehrere spektrale Kanäle auf, d.h. die vom Umlenkspiegel 24 kommende Fluoreszenz-Strahlung wird in einem Nebenfarbteiler 25 in zwei spektrale Kanäle aufgeteilt.

Jeder spektrale Kanal verfügt über eine Schlitzblende 26, die eine konfokale oder teilkonfokale Abbildung bezüglich der Probe 23 realisiert und deren Größe die Tiefenschärfe, mit der die Fluoreszenz-Strahlung detektiert werden kann, festlegt. Die Geometrie der Schlitzblende 26 bestimmt somit die Schnittebene innerhalb des (dicken) Präparates, aus der Fluoreszenz-Strahlung detektiert wird.

Der Schlitzblende 26 ist noch ein Blockfilter 27 nachgeordnet, das unerwünschte, in das Detektormodul 5 gelangte Anregungsstrahlung abblockt. Die derart abseparierte, aus einem bestimmten Tiefenabschnitt stammende, zeilenförmig aufgefächerte Strahlung wird dann von einem geeigneten Detektor 28 analysiert. Analog zum geschilderten Farbkanal ist auch der zweite spektrale Detektionskanal aufgebaut, der ebenfalls eine Schlitzblende 26a, ein Blockfilter 27a sowie einen Detektor 28a umfaßt.

Die Verwendung einer konfokalen Schlitz-Apertur im Detektormodul 5 ist nur beispielhaft. Natürlich kann auch ein Einzelpunktscanner realisiert sein. Die Schlitzblenden 26, 26a sind dann durch Lochblenden ersetzt und die Strahlformungseinheit kann entfallen. Im übrigen sind für eine solche Bauweise alle Optiken rotationssymmetrisch ausgeführt. Dann können natürlich statt einer Einzelpunktabtastung und -detektion auch prinzipiell beliebige Mehrpunktanordnungen, wie Punktwolken oder Nipkow-Scheibenkonzepte, verwendet werden. Wesentlich ist dann allerdings, daß der Detektor 28 ortsauflösend ist, da eine parallele Erfassung mehrerer Probenpunkte beim Durchlauf des Scanners erfolgt.

In Figur 1 ist zu sehen, daß die nach den beweglichen, d.h. verschieblichen Kollimatoren 12 und 13 vorliegenden Gauß'schen Strahlenbündel über eine Spiegeltreppe in Form der Strahlvereinigungsspiegel 14, 16 vereinigt und bei der gezeigten Bauweise mit konfokaler Schlitzblende anschließend in ein Strahlbündel mit rechteckigem Strahlquerschnitt konvertiert werden. In der Ausführungsform der Figur 1 wird in der Strahlformungseinheit ein Zylinderteleskop 37 verwendet, dem eine Asphäreneinheit 38 nachgeordnet ist, auf das eine Zylinderoptik 39 folgt.

Nach der Umformung liegt ein Strahl vor, der in einer Profilebene im wesentlichen ein rechteckiges Feld ausleuchtet, wobei die Intensitätsverteilung entlang der Feldlängsachse nicht gaußförmig, sondern kastenförmig ist.

Die Beleuchtungsanordnung mit der Asphäreneinheit 38 kann zur gleichmäßigen Füllung einer Pupille zwischen einer Tubuslinse und einem Objektiv dienen. Damit kann die optische Auflösung des Objektivs voll ausgeschöpft werden. Diese Variante ist somit auch zweckmäßig in einem Einzelpunkt oder Multipunkt scannenden Mikroskopsystem, z. B. in einem linien-scannenden System (bei letzterem zusätzlich zu der Achse, in der auf bzw. in die Probe fokussiert wird).

Die z. B. linienförmig konditionierte Anregungsstrahlung wird auf den Hauptfarbteiler 17 gelenkt. Dieser ist in einer bevorzugten Ausführungsform als spektral-neutraler Teilerspiegel gemäß der DE 10257237 A1 ausgeführt, deren Offenbarungsgehalt hier vollumfänglich einbezogen ist. Der Begriff "Farbteiler" umfaßt also auch nichtspektral wirkende Teilersysteme. Anstelle des beschriebenen spektral unabhängigen Farbteilers kann auch ein homogener Neutralteiler (z.B. 50/50, 70/30, 80/20 o.ä.) oder ein dichroitischer Teiler Verwendung finden. Damit applikationsabhängig eine Auswahl möglich ist, ist der Hauptfarbteiler vorzugsweise mit einer Mechanik versehen, die einen einfachen Wechsel ermöglicht, beispielsweise durch ein entsprechendes Teilerrad, das einzelne, austauschbare Teiler enthält.

## Patentansprüche

1. Laser-Scanning-Mikroskop mit einer Beleuchtungslichtverteilung, die scannend über eine Probe geführt wird und bei dem ein Bild der Probe aus dem beim Scannen entstehenden und detektierten Probenlicht aufgenommen wird,
wobei die Probe mit einer Bildrate von x Bildern pro Sekunde abgetastet wird,
wobei in einem Modus zur Einstellung der Geräteparameter die Bildrate bei gleichbleibender Abtastgeschwindigkeit, vorzugsweise zur Probenschonung, auf einen Bruchteil X/Y von X, Y >1 herabgesetzt wird.

2. Laser-Scanning-Mikroskop nach Anspruch 1, wobei die Beleuchtungslichtverteilung eine Linie oder eine Multipunktverteilung ist oder von einer Nipkowscheibe erzeugt wird.

3. Laser-Scanning-Mikroskop nach einem der vorangehenden Ansprüche,
wobei eine Signalverbindung zwischen mindestens einer Stelleinrichtung des Mikroskopes und der Bildaufnahme besteht und bei Auslösung einer Verstellung ein Bild aufgenommen wird.

4. Laser-Scanning-Mikroskop nach einem der vorangehenden Ansprüche,
wobei die Stelleinrichtungen der z-Trieb, und/oder Probentisch und/oder Filterwechsler und/oder Pinholeeinstellung und/oder hard- oder softwareseitige Benutzervorgaben und/oder Regelknöpfe und/oder Schalter sind.

5. Verfahren zum Betrieb eines Laser-Scanning-Mikroskopes, insbesondere nach Anspruch 2,
wobei eine Bildaufnahme erfolgt, wenn eine Verstellung am Mikroskop ausgelöst wird.

6. Verfahren nach Anspruch 5, wobei auf den Anzeigemitteln des Mikroskopes jeweils das zuletzt aufgenommene Bild angezeigt wird.
